# EUROPEAN PATENT APPLICATION

(11) **EP 4 838 123 A1**
(43) Date of publication of application: **11.11.2026**
(21) Application number: 24915703.3
(22) Date of filing: 19.12.2024
(51) Int. Cl.: F16L 15/04

(54) **THREADED JOINT**

(30) Priority: 04.01.2024 JP 2024000320
(71) Applicant: Nippon Steel Corporation, Tokyo 100-8071 (JP); Vallourec Oil and Gas France, 59620 Aulnoye-Aymeries (FR)
(72) Inventor: INOSE, Keita, Tokyo 100-8071 (JP); UGAI, Shin, Tokyo 100-8071 (JP); ANDO, Yoshinori, Tokyo 100-8071 (JP); WADA, Akira, Tokyo 100-8071 (JP)
(74) Representative: J A Kemp LLP
(86) International application number: PCT/JP2024/044903
(87) International publication number: WO 2025/146780

(57) **Abstract**

A threaded connection is provided that provides good sealability even in very low temperatures. The threaded connection is a threaded connection for steel pipe including a tubular pin and a tubular box, the pin and the box adapted to be made up as the pin is screwed into the box, the pin including a pin sealing surface and a male thread, the box including a box sealing surface corresponding to the pin sealing surface and a female thread corresponding to the male thread, the threaded connection satisfying the following expression, (1):
[Math. 1] $\frac{{δ}_{s}^{′}}{\left(t/D\right)} > 4.09$ (1).

The variables in expression (1) are defined in the description.

## Description

### TECHNICAL FIELD

The present disclosure relates to a threaded connection and, more particularly, a threaded connection used to connect steel pipes.

### BACKGROUND ART

In oil wells, natural-gas wells, etc. (hereinafter collectively referred to as "oil wells"), steel pipes called oil-well pipes are used. Oil-well pipes are connected to each other by means of a threaded connection before being installed in oil wells.

Generally, an end portion of an oil-well pipe with a male thread formed thereon includes an element to be inserted into a female thread, and thus is called a pin. An end portion of an oil-well pipe or coupling with a female thread formed thereon includes an element to receive a male thread, and thus is called a box.

There is a growing expectation for carbon dioxide capture and storage (CCS) technology as a key technology to achieve a sustainable carbon-neutral society. In designing a CCS well, it is necessary to take account of the behavior of carbon dioxide during operation, which requires expertise different from that for designing a conventional oil/gas well. For example, a rapid temperature drop may occur during operation, and its effects on the oil-well equipment must be taken into account. Non-patent document 1 reports that, during transient operations (i.e., closing-in and restarting), the pipe (i.e., tubing) for injecting carbon dioxide may be cooled to -20 °C in a short period of time; when a problem such as leak/blowout or release occurs, it may drop to -70 °C.

When the inner surface of the tubing is rapidly cooled, the sealability of the threaded connection for connecting joints of the tubing may alter. Specifically, a threaded connection called premium joint (PJ) exhibits very high sealability by virtue of a metal seal that achieves fitting interference; however, when the inner surface of the pin of the PJ is cooled, the metal sealing surface of the pin thermally contracts, which is expected to decrease seal contact force. However, sufficient research is yet to be done into the effects of cooling of the inner surface of the pin on the contact force of the metal seal of the PJ or into improving PJ design taking account of those effects.

### PRIOR ART DOCUMENTS

### PATENT DOCUMENTS

[Patent Document 1] WO2016/113790
[Patent Document 2] JP 2002-295747 A
[Patent Document 3] JP 2002-22070 A
[Patent Document 4] WO2002/075195
[Patent Document 5] WO2015-141159
[Patent Document 6] WO2012-060474

### NON-PATENT DOCUMENTS

[Non-Patent Document 1] Luis Acevedo and Ajay Chopra, "Influence of phase behavior in the well design of CO2 injectors", Energy Procedia 114 (2017) 5083-5099

### SUMMARY OF THE INVENTION

### PROBLEMS TO BE SOLVED BY THE INVENTION

An object of the present disclosure is to provide a threaded connection that provides good sealability even in very low temperatures.

### MEANS FOR SOLVING THE PROBLEMS

A threaded connection according to the present disclosure is a threaded connection for steel pipe including a tubular pin and a tubular box, the pin and the box adapted to be made up as the pin is screwed into the box, the pin including a pin sealing surface and a male thread, the box including a box sealing surface corresponding to the pin sealing surface and a female thread corresponding to the male thread, the threaded connection satisfying the following expression, (1).
[Math. 1]$\frac{{δ}_{s}^{′}}{\left(t/D\right)} > 4.09$ (1)

Here, [Math. 2] $\begin{matrix}{δ}_{s}^{′} = {δ}_{s} - {d}_{s} , \\ {d}_{s} = α ⋅ {D}_{sp} ⋅ \left({T}_{H}-{T}_{s}\right) , and \\ {T}_{s} = {T}_{L} + \frac{\left({T}_{H}-{T}_{L}\right)}{\left({D}_{BO}-{D}_{i}\right) / 2} ⋅ \frac{\left({D}_{sp}-{D}_{i}\right)}{2} .\end{matrix}$
D: outer diameter of pipe body [mm]
Dᵢ: inner diameter of pipe body [mm]
t: wall thickness of pipe body = (D-Dᵢ)/2 [mm]
D_{BO}: outer diameter of box [mm]
Dₛₚ: diameter of pin seal [mm]
D_{sb}: diameter of box seal [mm]
δₛ: amount of seal interference = Dₛₚ-D_{sb}[mm]
dₛ: amount of thermal contraction in diameter of pin seal [mm]
δₛ^{'}: amount of seal interference after cooling [mm]
T_{L}: temperature of inner surface of pin [°C]
Tₛ: temperature of pin sealing surface [°C]
T_{H}: temperature of outer surface of box [°C]
α: coefficient of thermal expansion of pipe body [1/°C]
T_{L} = T_{H} = 25 °C at room temperature
T_{L} = -80 °C and T_{H} = 25 °C after cooling

### EFFECTS OF THE INVENTION

The present disclosure provides a threaded connection that provides good sealability even when the inner surface of the pin has been cooled to very low temperatures so as to cause the pin to thermally contract.

### BRIEF DESCRIPTION OF THE DRAWINGS

[FIG. 1] FIG. 1 is a longitudinal cross-sectional view of a threaded connection according to embodiments.
[FIG. 2] FIG. 2 is a cross-sectional view of a connection for illustrating a seal interference.
[FIG. 3] FIG. 3 is a cross-sectional view of a connection for illustrating another seal interference.
[FIG. 4] FIG. 4 is a graph showing the relationship between the parameter δₛ'/(t/D) and seal contact force according to a first embodiment.
[FIG. 5] FIG. 5 is a graph showing the relationship between the parameter δ_{s_act}'/(t/D) and seal contact force according to a second embodiment.

### EMBODIMENTS FOR CARRYING OUT THE INVENTION

### <Summary of Embodiments>

A threaded connection according to a first embodiment is a threaded connection for steel pipe including a tubular pin and a tubular box, the pin and the box adapted to be made up as the pin is screwed into the box, the pin including a pin sealing surface and a male thread, the box including a box sealing surface corresponding to the pin sealing surface and a female thread corresponding to the male thread, the threaded connection satisfying the following expression, (1).
[Math. 3]$\frac{{δ}_{s}^{′}}{\left(t/D\right)} > 4.09$ (1).

Here, [Math. 4] $\begin{matrix}{δ}_{s}^{′} = {δ}_{s} - {d}_{s} , \\ {d}_{s} = α ⋅ {D}_{sp} ⋅ \left({T}_{H}-{T}_{s}\right) , and \\ {T}_{s} = {T}_{L} + \frac{\left({T}_{H}-{T}_{L}\right)}{\left({D}_{BO}-{D}_{i}\right) / 2} ⋅ \frac{\left({D}_{sp}-{D}_{i}\right)}{2} .\end{matrix}$
D: outer diameter of pipe body [mm]
Dᵢ: inner diameter of pipe body [mm]
t: wall thickness of pipe body = (D-Dᵢ)/2 [mm]
D_{BO}: outer diameter of box [mm]
Dₛₚ: diameter of pin seal [mm]
D_{sb}: diameter of box seal [mm]
δₛ: amount of seal interference = Dₛₚ-D_{sb}[mm]
dₛ: amount of thermal contraction in diameter of pin seal [mm]
δₛ': amount of seal interference after cooling [mm]
T_{L}: temperature of inner surface of pin [°C]
Tₛ: temperature of pin sealing surface [°C]
T_{H}: temperature of outer surface of box [°C]
α: coefficient of thermal expansion of pipe body [1/°C]
T_{L} = T_{H} = 25 °C at room temperature
T_{L} = -80 °C and T_{H} = 25 °C after cooling

A threaded connection according to a second embodiment is a threaded connection for steel pipe including a tubular pin and a tubular box, the pin and the box adapted to be made up as the pin is screwed into the box, the pin including a pin sealing surface and a male thread, the box including a box sealing surface corresponding to the pin sealing surface and a female thread corresponding to the male thread, the threaded connection satisfying the following expression, (2).
[Math. 5]$\frac{{δ}_{s _ act}^{′}}{\left(t/D\right)} \geq 2.0$ (2).

Here, [Math. 6] $\begin{matrix}{δ}_{s _ act}^{′} = {δ}_{s}^{′} - {δ}_{th}^{′} , \\ {δ}_{s}^{′} = {δ}_{s} - {d}_{s} , \\ {δ}_{th}^{′} = {δ}_{th} - {d}_{th} , \\ {d}_{s} = α ⋅ {D}_{sp} ⋅ \left({T}_{H}-{T}_{s}\right) , \\ {d}_{th} = α ⋅ D ⋅ \left({T}_{H}-{T}_{th}\right) , \\ {T}_{s} = {T}_{L} + \frac{\left({T}_{H}-{T}_{L}\right)}{\left({D}_{BO}-{D}_{i}\right) / 2} ⋅ \frac{\left({D}_{sp}-{D}_{i}\right)}{2} , and \\ {T}_{th} = {T}_{L} + \frac{\left({T}_{H}-{T}_{L}\right)}{\left({D}_{BO}-{D}_{i}\right) / 2} ⋅ t .\end{matrix}$
D: outer diameter of pipe body [mm]
Dᵢ: inner diameter of pipe body [mm]
t: wall thickness of pipe body = (D-Dᵢ)/2 [mm]
D_{BO}: outer diameter of box [mm]
Dₛₚ: diameter of pin seal [mm]
D_{sb}: diameter of box seal [mm]
δₛ: amount of seal interference = Dₛₚ-D_{sb}[mm]
δₜₕ: amount of thread interference [mm]
dₛ: amount of thermal contraction in diameter of pin seal [mm]
dₜₕ: amount of thermal contraction in diameter of outer surface of male thread [mm]
δₛ^{'}: amount of seal interference after cooling [mm]
δₜₕ^{'}: amount of thread interference after cooling [mm]
δ_{s_act}^{'}: actual amount of seal interference after cooling [mm]
T_{L}: temperature of inner surface of pin [°C]
Tₜₕ: temperature of outer surface of male thread [°C]
Tₛ: temperature of pin sealing surface [°C]
T_{H}: temperature of outer surface of box [°C]
α: coefficient of thermal expansion of pipe body [1/°C]
T_{L} = T_{H} = 25 °C at room temperature
T_{L} = -80 °C and T_{H} = 25 °C after cooling

The threaded connection according to the second embodiment preferably satisfies the following expression, (3):
[Math. 7]${δ}_{th}^{′} > 0$ (3).

Although the above specifies that T_{L} = T_{H} = 25 °C at room temperature and T_{L} = -80 °C and T_{H} = 25 °C after cooling, this does not limit in any way the temperatures in which the threaded connection is actually used, since the room temperature and cooling temperatures vary depending on the environment in which the threaded connection is actually used.

### <Details of Embodiments>

Now, embodiments will be described in detail with reference to the drawings. The same or corresponding elements in the drawings are labeled with the same reference signs, and the same description will not be repeated.

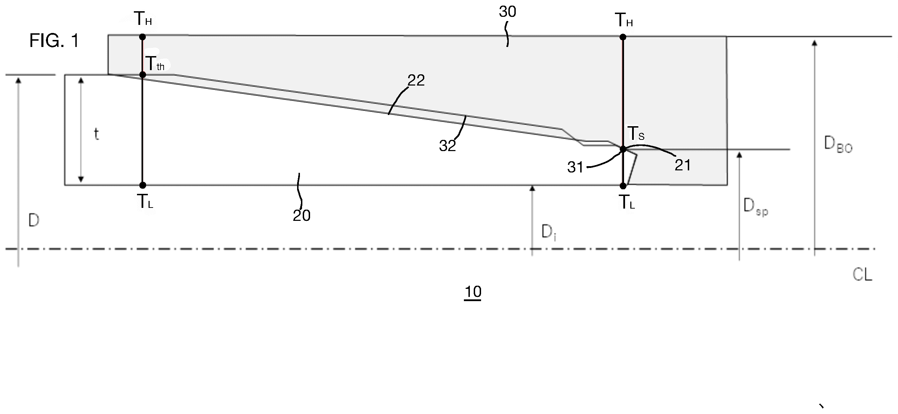

Referring to FIG. 1, a threaded connection 10 according to embodiments includes a tubular pin 20 and a tubular box 30. The pin 20 is screwed into the box 30 such that the pin 20 and box 30 are made up. The pin 20 includes a pin sealing surface 21 and a male thread 22. The box 30 includes a box sealing surface 31 corresponding to the pin sealing surface 21, and a female thread 32 corresponding to the male thread 22.

The thermal contraction of the inner surface of the pin in a CCS well when cooled to very low temperatures will be discussed. The definitions of the variables used below are as follows:
D: outer diameter of pipe body [mm]
Dᵢ: inner diameter of pipe body [mm]
t: wall thickness of pipe body = (D-Dᵢ)/2 [mm]
D_{BO}: outer diameter of box [mm]
Dₛₚ: diameter of pin seal [mm]
D_{sb}: diameter of box seal [mm]
δₛ: amount of seal interference = Dₛₚ-D_{sb} [mm]
δₜₕ: amount of thread interference [mm]
dₛ: amount of thermal contraction in diameter of pin seal [mm]
dₜₕ: amount of thermal contraction in diameter of outer surface of male thread [mm]
δₛ^{'}: amount of seal interference after cooling [mm]
δₜₕ^{'}: amount of thread interference after cooling [mm]
δ_{s_act}^{'}: actual amount of seal interference after cooling [mm]
T_{L}: temperature of inner surface of pin [°C]
Tₛ: temperature of pin sealing surface [°C]
Tₜₕ: temperature of outer surface of male thread [°C]
T_{H}: temperature of outer surface of box [°C]
α: coefficient of thermal expansion of pipe body [1/°C]

First, a case will be discussed where the threaded connection 10 is made up at the temperature T_{H} and embedded in a CCS well, and then the temperature of the inner surface of the pipe body is cooled to T_{L}. It is assumed here that the outer-surface temperature of the box 30 is at T_{H} and is under steady-state conditions. Further, ignoring the heat resistance at the contacts and dispersion of heat, and so on, and assuming a linear temperature distribution in the radial directions, the outer-surface temperature of the male thread 22, Tₜₕ, and the temperature of the pin sealing surface 21, Tₛ, shown in FIG. 1 are given by the following expressions. [Math. 8] $\begin{matrix}{T}_{th} = {T}_{L} + \frac{\left({T}_{H}-{T}_{L}\right)}{\left({D}_{BO}-{D}_{i}\right) / 2} ⋅ t , and \\ {T}_{s} = {T}_{L} + \frac{\left({T}_{H}-{T}_{L}\right)}{\left({D}_{BO}-{D}_{i}\right) / 2} ⋅ \frac{\left({D}_{sp}-{D}_{i}\right)}{2} .\end{matrix}$

Here, if the coefficient of thermal expansion of the pin 20 is α[1/°C], the amount of thermal contraction in diameter of the outer surface of the male thread, dₜₕ, and the amount of thermal contraction in diameter of the pin seal, dₛ, are given by the following expressions. [Math. 9] $\begin{matrix}{d}_{th} = α ⋅ D ⋅ \left({T}_{H}-{T}_{th}\right) , and \\ {d}_{s} = α ⋅ {D}_{sp} ⋅ \left({T}_{H}-{T}_{s}\right) .\end{matrix}$

When the inner surface of the pin 20 is cooled and thermally contracts, this decreases the amount of thread interference δₜₕ and the amount of seal interference δₛ that have been given to the threaded connection 10 in advance.

As used herein, in the case of a threaded connection where the thread root of the pin and the thread crest of the box contact for interference, the amount of thread interference means the difference between the design diameter of the male-thread root before having interference as measured at any given position along the pipe-axis CL direction, on the one hand, and the design diameter of the female-thread crest before having interference as measured at that position, on the other. In the case of a threaded connection where the thread crest of the pin and the thread root of the box contact for interference, the amount of thread interference means the difference between the design diameter of the male-thread crest before having interference as measured at any given position along the pipe-axis CL direction, on the one hand, and the design diameter of the female-thread root before having interference as measured at that position, on the other.

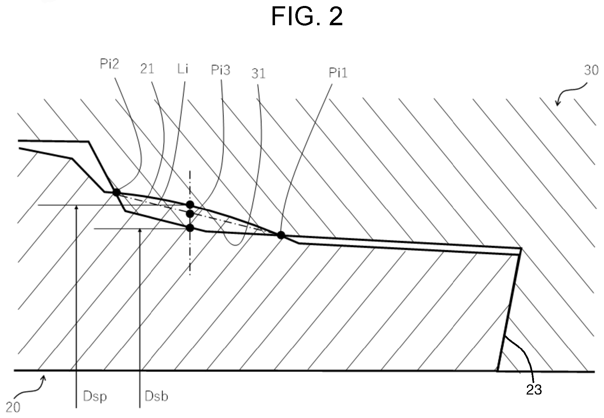

As shown in FIG. 2, when viewed in a longitudinal cross section of the threaded connection, the curved line representing the pin sealing surface 21 and the curved line representing the box sealing surface 31 intersect at two points, Pi1 and Pi2. The two intersection points Pi1 and Pi2 are connected with a straight line Li. Dₛₚ is the design diameter of the pin sealing surface 21 before having interference as measured at the middle point Pi3 of the straight line Li. D_{sb} is the design diameter of the box sealing surface 31 before having interference as measured at the middle point Pi3 of the straight line Li. The amount of seal interference is the difference between Dₛₚ and D_{sb}.

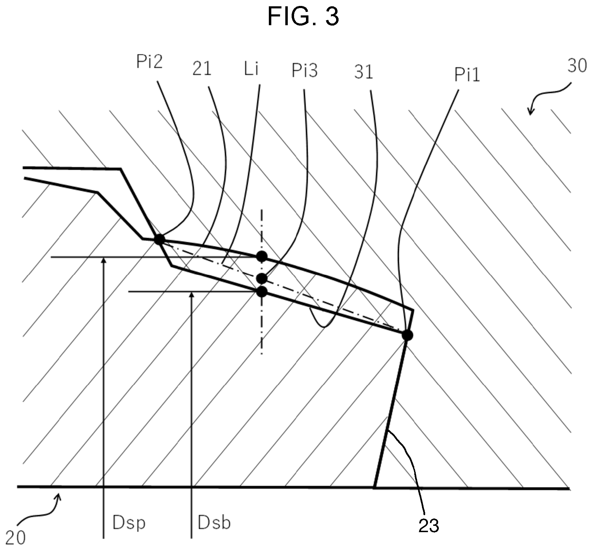

As shown in FIG. 3, when viewed in a longitudinal cross section of a threaded connection where the pin sealing surface 21 and the pin shoulder surface 23 are located adjacent to each other, the curved line representing the pin sealing surface 21 and the curved line representing the box sealing surface 31 intersect at one point Pi2 whereas the curved line representing the pin shoulder surface 23 and the curved line representing the box sealing surface 31 intersect at point Pi1, where the two intersection points Pi1 and Pi2 are connected with a straight line Li. Dₛₚ is the design diameter of the pin sealing surface 21 before having interference as measured at the middle point Pi3 of the straight line Li. D_{sb} is the design diameter of the box sealing surface 31 before having interference as measured at the middle point Pi3 of the straight line Li. The amount of seal interference is the difference between Dₛₚ and D_{sb}.

The amount of thread interference, δₜₕ', and the amount of seal interference after thermal contraction, δₛ' are given by the following respective expressions. [Math. 10] $\begin{matrix}{δ}_{th}^{′} = {δ}_{th} - {d}_{th} , and \\ {δ}_{s}^{′} = {δ}_{s} - {d}_{s} .\end{matrix}$

### <First Embodiment>

In the threaded connection 10, the larger the amount of seal interference, the larger the contact pressure of the metal seal becomes, improving sealability. Further, the internal-pressure load applied to the threaded connection 10 increases generally in response to the ratio between the wall thickness and outer diameter of the pipe body, t/D. The following discusses a parameter obtained by dividing the amount of seal interference after cooling, δₛ', by t/D. [Math. 11] $\frac{{δ}_{s}^{′}}{\left(t/D\right)} .$

The larger the amount of seal interference after cooling δₛ', or the smaller the internal-pressure load applied to the metal seal, the larger the value of this parameter becomes. Thus, it is estimated that the larger this parameter, the better the sealability obtained.

As will be described in detail with reference to examples further below, the present inventors, after research, discovered that good sealability is obtained when this parameter exceeds 4.09.

### <Second Embodiment>

In the threaded connection 10, the larger the amount of seal interference, the larger the contact pressure of the metal seal becomes, improving sealability. In addition, if the threads 22 and 32 also have an amount of interference, the amount of thread interference causes the pin 20 to decrease in diameter and the box 30 to increase in diameter, which causes a decrease in the actual amount of interference of the seal. That is, in considering the sealability of the seal, it is meaningful to consider the actual amount of interference, obtained by subtracting the thread interference from the seal interference. The actual amount of seal interference after the inner surface of the pin 20 has been cooled, δ_{s_act}', is given by the following expression. [Math. 12] ${δ}_{s _ act}^{′} = {δ}_{s}^{′} - {δ}_{th}^{′} .$

Further, the pressure load applied to the threaded connection 10 increases generally in response to the ratio between the wall thickness and outer diameter of the pipe body, t/D. The following discusses a parameter obtained by dividing the actual amount of seal interference after cooling, δ_{s_act}', by t/D. [Math. 13] $\frac{{δ}_{s _ act}^{′}}{\left(t/D\right)} .$

The larger the amount of seal interference after cooling δ_{s_act}', or the smaller the pressure load applied to the metal seal, the larger the value of this parameter becomes. Thus, it is estimated that the larger this parameter, the better the sealability obtained.

As described in detail with reference to examples further below, the present inventors, after research, discovered that good sealability is obtained if this parameter is 2.0 or more.

On the other hand, if the amount of thread interference after cooling becomes zero, heat flow from the box 30 at a higher temperature to the pin 20 at a lower temperature through the threads is small. That is, the temperature of the pin 20 is lower than estimated from expression (1) or (2), increasing the amount of thermal contraction and potentially further decreasing the amount of seal interference after cooling. In view of this, it is preferable that the amount of thread interference after thermal contraction, δₜₕ', is larger than zero, as represented by the following expression. [Math. 14] ${δ}_{th}^{′} = {δ}_{th} - {d}_{th} > 0 .$

The present disclosure is not limited to the above-described embodiments, and various modifications are possible without departing from the present disclosure.

### EXAMPLES

To confirm the advantages of the threaded connection for steel pipe according to the present disclosure, numerical analysis simulations were conducted using the elasto-plastic finite element method.

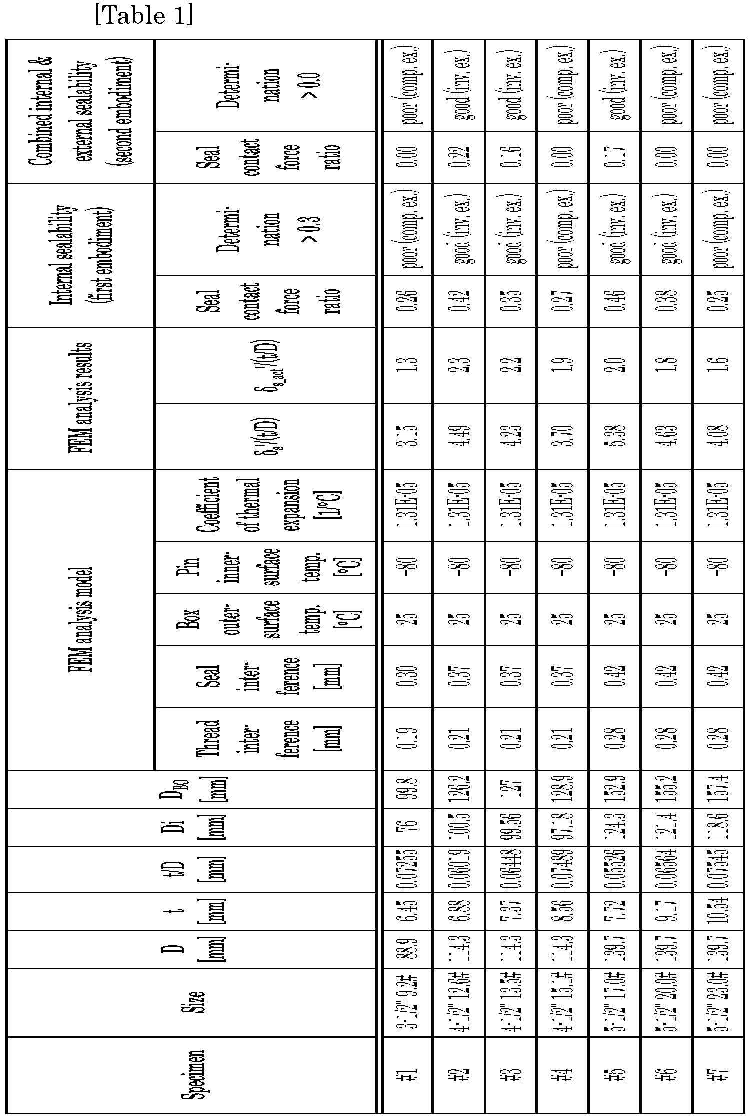

### (1) Size of steel pipe

As indicated in Table 1.

### (2) Grade of steel pipe

An oil-well pipe material provided by 25 % Cr steel with a nominal yield stress of 80 ksi was used.

The finite element analyses used models of specimens in which the material was an isotropically hardening elasto-plastic material, Young's modulus E was 210 GPa, Poisson's ratio ν was 0.3, the yield strength was 80ksi (551.6 MPa) with a 0.2 % offset strain.

### (3) Connection configuration

The pin included, from its tip onward: a shoulder; a nose; a metal seal; and a male thread.

### (4) Thread shape

A buttress thread where, upon completion of make-up, the thread root of the pin and the thread crest of the box were in contact and the load flank of the pin and the load flank of the box were in contact. A clearance was present between the thread crest of the pin and the thread root of the box, and also between the stab flank of the pin and the stab flank of the box.

### (5) Coefficient of thermal expansion

$1.31 \times {10}^{- 6} 1 / ° C$

### (6) Temperature

Condition set 1: 25 °C at box outer surface, 25 °C at pin inner surface; and
Condition set 2: 25 °C at box outer surface, - 80 °C at pin inner surface.

The temperature of the pin inner surface used was the lowest temperature that can be expected in CCS wells.

### <Evaluation Method>

For each specimen, thread make-up was analyzed and then combined load cycles simulating Series A tests of the API 5C5 standard were applied. Sealability was evaluated based on seal contact force per unit circumferential length. For each connection model, a thermal-stress-coupled steady-state analysis was conducted under the temperature conditions of condition sets 1 and 2 to provide the minimum value of the seal contact force under the load cycles. Thereafter, the minimum value obtained from condition set 2 (i.e., very low temperature) was divided by the value from condition set 1 (i.e., room temperature) and the result was defined as a seal contact force ratio. The higher this value, the better sealability is indicated.

### <Results (First Embodiment)>

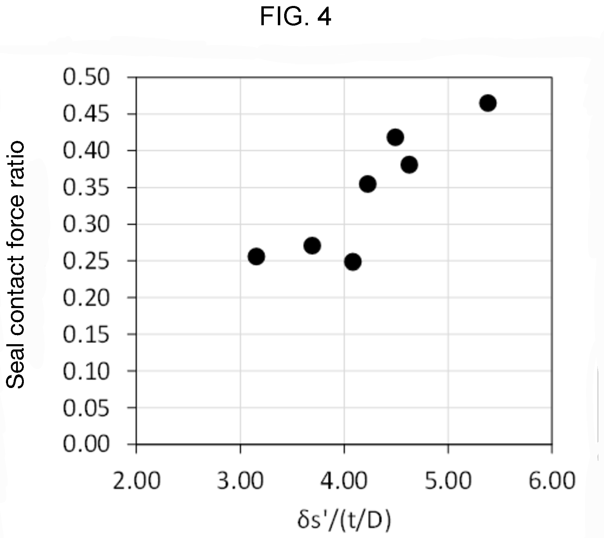

As shown in FIG. 4, for each of specimens #1, #4 and #7, the parameter δₛ'/(t/D) was not larger than 4.08, meaning a small amount of seal interference δₛ' after thermal contraction of the pin relative to the internal-pressure load applied, resulting in low sealability after cooling.

For each of specimens #2, #3, #5 and #6, the parameter δₛ'/(t/D) was larger than 4.08, meaning a sufficient amount of seal interference δₛ' relative to the internal-pressure load applied even after thermal contraction of the pin, resulting in good sealability after cooling.

### <Results (Second Embodiment)>

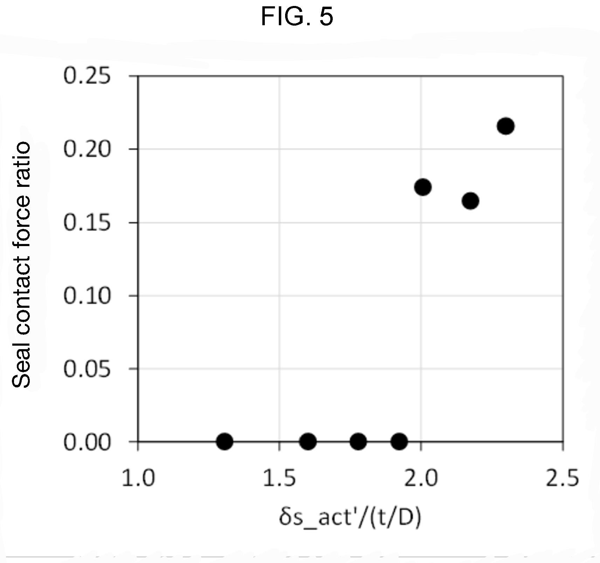

As shown in FIG. 5, for each of specimens #1, #4, #6 and #7, the parameter δ_{s_act}'/(t/D) was smaller than 2.0, meaning a small actual amount of seal interference after thermal contraction of the pin, δ_{s_act}', relative to the pressure load applied, resulting in low sealability after cooling.

For each of specimens #2, #3 and #5, the parameter δ_{s_act}'/(t/D) was not smaller than 2.0, meaning a sufficient actual amount of seal interference δ_{s_act}' relative to the pressure load applied even after thermal contraction of the pin, resulting in good sealability after cooling.

For each of specimens #2, #3 and #5, the amount of thread interference was larger than zero even after cooling; thus, heat flowed from the box at a higher temperature to the pin at a lower temperature, thereby preventing excessive cooling of the pin, resulting in good sealability.

### REFERENCE SIGNS LIST

10: threaded connection
20: pin
21: pin sealing surface
22: male thread
30: box
31: box sealing surface
32: female thread

## Claims

1. A threaded connection for steel pipe comprising a tubular pin and a tubular box, the pin and the box adapted to be made up as the pin is screwed into the box,
the pin including a pin sealing surface and a male thread,
the box including a box sealing surface corresponding to the pin sealing surface and a female thread corresponding to the male thread,
the threaded connection satisfying the following expression, (1):
[Math.1] $\frac{{δ}_{s}^{′}}{\left(t/D\right)} > 4.09$ (1), where [Math. 2] $\begin{matrix}{δ}_{s}^{′} = {δ}_{s} - {d}_{s} , \\ {d}_{s} = α ⋅ {D}_{sp} ⋅ \left({T}_{H}-{T}_{s}\right) , and \\ {T}_{s} = {T}_{L} + \frac{\left({T}_{H}-{T}_{L}\right)}{\left({D}_{BO}-{D}_{i}\right) / 2} ⋅ \frac{\left({D}_{sp}-{D}_{i}\right)}{2} ,\end{matrix}$
D: outer diameter of pipe body [mm]
Dᵢ: inner diameter of pipe body [mm]
t: wall thickness of pipe body = (D-Dᵢ)/2 [mm]
D_{BO}: outer diameter of box [mm]
Dₛₚ: diameter of pin seal [mm]
D_{sb}: diameter of box seal [mm]
δₛ: amount of seal interference = Dₛₚ-D_{sb}[mm]
dₛ: amount of thermal contraction in diameter of pin seal [mm]
δₛ': amount of seal interference after cooling [mm]
T_{L}: temperature of inner surface of pin [°C]
Tₛ: temperature of pin sealing surface [°C]
T_{H}: temperature of outer surface of box [°C]
α: coefficient of thermal expansion of pipe body [1/°C]
T_{L} = T_{H} = 25 °C at room temperature
T_{L} = -80 °C and T_{H} = 25 °C after cooling

2. A threaded connection for steel pipe comprising a tubular pin and a tubular box, the pin and the box adapted to be made up as the pin is screwed into the box, the pin including a pin sealing surface and a male thread,
the box including a box sealing surface corresponding to the pin sealing surface and a female thread corresponding to the male thread,
the threaded connection satisfying the following expression, (2):
[Math. 3] $\frac{{δ}_{s _ act}^{′}}{\left(t/D\right)} \geq 2.0$ (2), where [Math. 4] $\begin{matrix}{δ}_{s _ act}^{′} = {δ}_{s}^{′} - {δ}_{th}^{′} . \\ {δ}_{s}^{′} = {δ}_{s} - {d}_{s} , \\ {δ}_{th}^{′} = {δ}_{th} - {d}_{th} , \\ {d}_{s} = α ⋅ {D}_{sp} ⋅ \left({T}_{H}-{T}_{s}\right) , \\ {d}_{th} = α ⋅ D ⋅ \left({T}_{H}-{T}_{th}\right) , \\ {T}_{s} = {T}_{L} + \frac{\left({T}_{H}-{T}_{L}\right)}{\left({D}_{BO}-{D}_{i}\right) / 2} ⋅ \frac{\left({D}_{sp}-{D}_{i}\right)}{2} , and \\ {T}_{th} = {T}_{L} + \frac{\left({T}_{H}-{T}_{L}\right)}{\left({D}_{BO}-{D}_{i}\right) / 2} ⋅ t ,\end{matrix}$
D: outer diameter of pipe body [mm]
Dᵢ: inner diameter of pipe body [mm]
t: wall thickness of pipe body = (D-Dᵢ)/2 [mm]
D_{BO}: outer diameter of box [mm]
Dₛₚ: diameter of pin seal [mm]
D_{sb}: diameter of box seal [mm]
δₛ: amount of seal interference = Dₛₚ-D_{sb} [mm]
δₜₕ: amount of thread interference
dₛ: amount of thermal contraction in diameter of pin seal [mm]
dₜₕ: amount of thermal contraction in diameter of outer surface of male thread [mm]
δₛ^{'}: amount of seal interference after cooling
δₜₕ^{'}: amount of thread interference after cooling [mm]
δ_{s_act}^{'}: actual amount of seal interference after cooling [mm]
T_{L}: temperature of inner surface of pin [°C]
Tₛ: temperature of pin sealing surface [°C]
Tₜₕ: temperature of outer surface of male thread [°C]
T_{H}: temperature of outer surface of box [°C]
α: coefficient of thermal expansion of pipe body [1/°C]
T_{L} = T_{H} = 25 °C at room temperature
T_{L} = -80 °C and T_{H} = 25 °C after cooling

3. The threaded connection according to claim 2, wherein the threaded connection satisfies the following expression, (3):
[Math. 5] ${δ}_{th}^{′} > 0$ (3).
